# EUROPEAN PATENT APPLICATION

(11) **EP 4 598 264 A1**
(43) Date of publication of application: **06.08.2025**
(21) Application number: 24155582.0
(22) Date of filing: 02.02.2024
(51) Int. Cl.: H05B 1/02, H05B 3/20, B60H 1/22, B60L 1/04

(54) **METHOD OF OPERATING AN ELECTRIC HEATER AND THE ELECTRIC HEATER**

(71) Applicant: MAHLE International GmbH, 70376 Stuttgart (DE)
(72) Inventor: GONZALEZ ESPIN, Francisco, 46185 La Pobla de Valbona (ES); IRMLER, Klaus, 72072 Tübingen (DE); PAPKE, Chris Andre, 70180 Stuttgart (DE); WALTER, Christoph, 70469 Stuttgart (DE); WANKE, Robin, 46530 Puzol (ES); WEHOWSKI, Manuel, 74321 Bietigheim-Bissingen (DE)
(74) Representative: BRP Renaud & Partner mbB Rechtsanwälte Patentanwälte Steuerberater

(57) **Abstract**

The invention relates to a method (2) for operating an electric heater (1) with at least two resistor elements (TFR1, TFR2). A pulse-width-modulated operating voltage (U) is applied to the resistor elements (TFR1, TFR2) in such a way that the voltage pulses of the individual voltages (U_TFR1, U_TFR2) at the resistor elements (TFR1, TFR2) are shifted in time and the maximum current (I_MAX) in the heater (1) is thereby reduced.

The invention also relates to an electric heater (1) for carrying out the method (2) according to the invention.

## Description

The invention relates to a method for operating an electric heater for a battery electric vehicle with at least two resistor elements according to the general term of claim 1. The invention also relates to an electric heater for carrying out the method.

In a battery electric vehicle, a fluid can be heated by means of an electric heater and individual components of the vehicle can be heated by means of the fluid. To generate the heat, the electric heater can, for example, contain thick-film elements or so-called TFR elements (TFR: thick-film resistor). The thick-film elements can be connected to flat tubes through which a fluid flows in a heat-transferring manner. When the voltage is applied to the heater, heat can be generated in the thick-film elements and then transferred to the fluid.

CN 211831201 U discloses, for example, an electric heater with TFR elements.

In a battery electric vehicle, heating power requirements should be met over a wide voltage range. For example, a traction battery of the battery electric vehicle can provide a voltage in the range between 250V and 900V depending on its state of charge. In order to ensure the controllability of the heater and the regulation of the heater at high voltages, the heater can be controlled with a PWM signal (PWM: pulse width modulation). Disadvantageously, the maximum current in the heater cannot be reduced on this way. This overloads the supply network and predefined current limit values can be exceeded.

The object of the invention is therefore to provide an improved or at least alternative embodiment for a method of operating an electric heater, in which the disadvantages described are overcome. The object of the invention is also to provide a corresponding heater for carrying out the method.

According to the invention, this object is solved by the subject matter of the independent claims. Advantageous embodiments are the subject of the dependent claims.

The present invention is based on the general idea of providing a suitable design and a suitable electrical interconnection of thick film elements in an electric heater to ensure powerful and efficient heating and minimized load on the supply network.

The method according to the invention is provided for operating an electric heater for a battery electric vehicle with at least two resistor elements. The heater is operated with an operating voltage between a minimum voltage and a maximum voltage and pulse-width-modulated with a duty cycle. The heater is controlled and/or regulated to generate a heating power between a required minimum heating power and a required maximum heating power. According to the invention, the heater can be operated with the operating voltage in a first voltage range with comparatively low voltage values, in a second voltage range with comparatively medium voltage values and in a third voltage range with comparatively high voltage values. When the heater is operated with the operating voltage in the first voltage range, the resistor elements are connected in parallel with one another and the operating voltage is pulse-width-modulated with the duty cycle equal to 100% and applied to the resistor elements. When the heater is operated with the operating voltage in the second voltage range, the resistor elements are connected in parallel with one another and the operating voltage is pulse-width-modulated with the duty cycle between 100% and 50%. The operating voltage is applied to the resistor elements in such a way that voltage pulses of individual voltages at the resistor elements corresponding to the operating voltage alternate in time. When the heater is operated with the operating voltage in the third voltage range, the resistor elements are connected in parallel with one another and the operating voltage is pulse-width-modulated with the duty cycle between 50% and 0%. The operating voltage is applied to the resistor elements in such a way that voltage pulses of individual voltages at the resistor elements corresponding to the operating voltage alternate in time.

The required minimum heating power is the minimum heating power that the heater should provide according to an external specification. The required maximum heating power is the maximum heating power that the heater should provide according to an external specification. The required minimum heating power and the required maximum heating power can therefore be specified externally, for example, and differ from the minimal and maximal heating power that can be generated by the heater. The operating voltage can be provided by the traction battery of the battery electric vehicle, for example. The traction battery provides a direct voltage between the minimum voltage and the maximum voltage, for example between 250V and 900V, which is then pulse-width-modulated and provided to the heater as the operating voltage.

In the first voltage range, the operating voltage is provided to the heater with comparatively low voltage values. Because the operating voltage in the first voltage range is comparatively low, the maximum current in the heater is also comparatively low. At this operating voltage, the heating power achieved by the heater is below the required maximum heating power, even at the duty cycle is 100%, and the heating power generated by the heater does not have to be reduced.

In the second voltage range, the operating voltage is provided to the heater with comparatively medium voltage values. At a duty cycle of 100%, the heating power generated by the heater would exceed the required maximum heating power. For this reason, the operating voltage is pulse-width-modulated, thereby reducing the heating power generated by the heater to the required values. The operating voltage is applied to the resistor elements in such a way that voltage pulses of individual voltages at the resistor elements corresponding to the operating voltage alternate in time. In other words, the voltage pulses are shifted in time in such a way that the voltage pulses of the individual voltage at one resistor element lie between the voltage pulses of the individual voltage at the other resistor element. For example, the individual voltages at the resistor elements corresponding to the operating voltage can be shifted relative to each other by half the period duration of the pulse-width-modulated operating voltage. The individual voltages are applied to the resistor elements alternately over time and the individual current flows in the resistor elements also alternately over time. As a result, at least the average current in the heater can be reduced.

In the second voltage range, the duty cycle of the pulse-width-modulated operating voltage varies between 100% and 50%. In the second voltage range, the duty cycle of the pulse-width-modulated operating voltage can fall from 100% to 50% with the increasing operating voltage. The overlap time, in which the voltage pulses of the individual voltages at the resistor elements corresponding to the operating voltage overlap in time, is not equal to zero, but can be minimized. In particular, the overlap time can be less than a product of a period duration of the pulse-width-modulated operating voltage and a difference of the double duty cycle and 100% divided by 100%.

In the third voltage range, the operating voltage is provided to the heater with comparatively high voltage values. Similar to the second voltage range, at a duty cycle of 100%, the heating power generated by the heater would exceed the required maximum heating power. For this reason, the operating voltage is pulse-width-modulated, thereby reducing the heating power generated by the heater to the required values. The operating voltage is applied to the resistor elements in such a way that voltage pulses of individual voltages at the resistor elements corresponding to the operating voltage alternate in time. In other words, the voltage pulses are shifted in time in such a way that the voltage pulses of the individual voltage at one resistor element lie between the voltage pulses of the individual voltage at the other resistor element.

In the third voltage range, the duty cycle of the operating voltage varies between 50% and 0%. In the third voltage range, the duty cycle of the pulse-width-modulated operating voltage can fall from 50% to 0% with the increasing operating voltage. Due to the duty cycle between 50% and 0%, the overlap time, in which the voltage pulses of the individual voltages at the resistor elements corresponding to the operating voltage overlap in time, can be zero. For this purpose, the individual voltages at the resistor elements corresponding to the operating voltage can be shifted relative to each other by half the period duration of the pulse-width-modulated operating voltage. As a result, the voltage pulses of the individual voltages at the resistor elements corresponding to the operating voltage do not overlap in time. Consequently, the individual currents at the resistor elements also do not overlap in time. As a result, the maximum current in the heater - which is a sum of the individual currents at the resistor elements - is always equal to the respective individual current at the respective individual resistor element. The maximum current at the heater is thus reduced.

In summary, the heater can be controlled and/or regulated in a wide voltage range to the heating power between the required minimum heating power and the required maximum heating power. The maximum current during operation of the heater can be reduced, thereby reducing the load on the supply network. The control unit can be easily realized with a small number of switching elements such as IGBTs.

The electrical resistance of the resistor elements can be selected in such a way that the heater provides the required minimum heating power at the minimum voltage. This means that the minimum heating power of the heater can be achieved even with a low operating voltage.

At least one of the resistor elements can contain at least two resistor tracks which are connectable in series and in parallel to one another. The resistor tracks of the resistor element can thus be connected in parallel or in series depending on the operating voltage applied. The individual resistor tracks can be connected in parallel at the comparatively low and/or comparatively medium voltage values of the operating voltage and in series at the comparatively medium and/or comparatively high voltage values of the operating voltage. In this way, the electrical resistance of the resistor element can be varied and enables further variations by operating the heater. Alternatively or additionally, individual or some resistor tracks of the resistor element can be switched off depending on the operating voltage. So, the operating voltage can be only applied to individual or some resistor tracks of the resistor element. Here too, further variations can be achieved by operating the heater.

In a first possible embodiment of the method, the heater can be operated with the operating voltage - in particular exclusively - in the three voltage ranges described above.

For defining the three voltage ranges, a first voltage and a second voltage can be defined. The first voltage can be defined as a voltage, at which the required maximum heating power is generated with the duty cycle equal to 100%. The second voltage can be defined as a voltage, at which the required maximum heating power is generated with the duty cycle equal to 50%. In the first voltage range, the operating voltage can be provided with the comparatively low voltage values between the minimum voltage and the first voltage. In the second voltage range, the operating voltage can be provided with the comparatively medium voltage values between the first voltage and the second voltage. In the third voltage range, the operating voltage can then be provided with the comparatively high voltage values between the second voltage and the maximum voltage. In other words, the entire voltage range provided by the traction battery of the battery electric vehicle between the minimum voltage and the maximum voltage can be divided into three voltage ranges.

In a second possible embodiment of the method, the heater can be operated in a fourth voltage range with comparatively very high voltage values. When the heater is operated with the operating voltage in the fourth voltage range, the resistor elements can be connected in series with one another. When the resistor elements are connected in series, the maximum current in the heater can be reduced while the generated heating power remains constant.

For defining the four voltage ranges, a first voltage and a second voltage can be defined. The first voltage can be defined as a voltage, at which the required maximum heating power is generated with the duty cycle equal to 100%. The second voltage can be defined as a voltage, at which the required maximum heating power is generated with the duty cycle equal to 50%. In the first voltage range, the operating voltage can then be provided with the comparatively low voltage values between the minimum voltage and the first voltage. In the second voltage range, the operating voltage can then be provided with the comparatively medium voltage values between the first voltage and the second voltage. In the third voltage range, the operating voltage can then be provided with the comparatively high voltage values between the second voltage and a double first voltage. In the fourth voltage range, the operating voltage can then be provided with the comparatively very high voltage values between the double first voltage and the maximum voltage. In other words, the entire voltage range provided by the traction battery of the battery electric vehicle between the minimum voltage and the maximum voltage can be divided into four voltage ranges.

In the present invention, the comparatively low voltage values are smaller than the comparatively medium voltage values and the comparatively high voltage values and the comparatively very high voltage values. The medium voltage values are smaller than the comparatively high voltage values and the comparatively very high voltage values. The comparatively high voltage values are smaller than the comparatively very high voltage values. The voltage ranges assigned to the individual voltage values do not overlap and are adjacent to each other. The voltage ranges cover the entire voltage range provided to the heater between the minimum voltage and the maximum voltage.

The invention also relates to a heater for a battery electric vehicle for heating a fluid. The heater contains at least two resistor elements each with an electrical resistance, and at least three flat tubes through which the fluid can flow. The resistor elements and the flat tubes are stacked together in such a way that each of the resistor elements is arranged between two flat tubes. Preferably, the number of flat tubes in the heater is one greater than the number of resistor elements. The resistor elements are connected to the adjacent i.e. neighboring flat tubes in a heat-transferring manner. The heater also contains a control unit for controlling and/or regulating the resistor elements. According to the invention, the heater is provided to carry out the method described above.

The resistor elements of the heater can in particular be thick-film heating elements or so-called TFR heating elements. In particular, the resistor elements can be flat. The resistor elements can be connected to the adjacent flat tubes by means of a thermally conductive adhesive, for example. Other thermally conductive contact media are also possible. The resistor elements can be identical parts. The resistor elements can have a mirror-inverted design to improve the heat transfer between the resistor elements and the flat tubes i.e. the fluid flowing in the flat tubes. The electrical resistance of at least some of the resistor elements can be different or identical.

The resistor elements of the heater can be connected in parallel to each other. As a result, the heater can be provided to carry out the method according to the first embodiment described above. Alternatively, the resistor elements of the heater can be connectable in parallel and in series with one another. In this way, the heater can be provided to carry out the method according to the first and/or second embodiment described above.

At least one of the resistor elements can contain at least two resistor tracks, each with an electrical resistance. The resistor tracks of the resistor element can be connected in parallel to each other. The electrical resistance of at least some of the resistor tracks of the resistor element can be different or identical. The resistor tracks of the resistor element can be connectable in parallel and in series with one another. Individual or some of the resistor tracks of the resistor element can be switchable off. In this way, the electrical resistance of the resistor element can be adjusted i.e. changed depending on the operating voltage.

Further important features and advantages of the invention are apparent from the sub-claims, from the drawings and from the associated description of the figures with reference to the drawings.

It is understood that the features mentioned above and those to be explained below can be used not only in the combination indicated in each case, but also in other combinations or on their own, without departing from the scope of the present invention.

Preferred embodiments of the invention are shown in the drawings and are explained in more detail in the following description, with identical reference signs referring to identical or similar or functionally identical components.

It shows, in each case schematically
- Fig. 1: a sectional view of a heater according to the invention with two resistor elements;
- Fig. 2: a view of the heater according to the invention in a first embodiment;
- Fig. 3 to 5: time-dependent diagrams of individual voltages at the resistor elements of the heater according to the invention in the first embodiment in different voltage ranges;
- Fig. 6: a voltage-dependent diagram of a heating power of the heater according to the invention in the first embodiment;
- Fig. 7: a voltage-dependent diagram of a current in the heater according to the invention in the first embodiment;
- Fig. 8 and 9: views of the heater according to the invention in a second embodiment in different switching states;
- Fig. 10: a voltage-dependent diagram of a heating power of the heater according to the invention in the second embodiment;
- Fig. 11: a voltage-dependent diagram of a current in the heater according to the invention in the second embodiment;
- Fig. 12 and 13: views of the heater according to the invention in a third embodiment in different switching states.

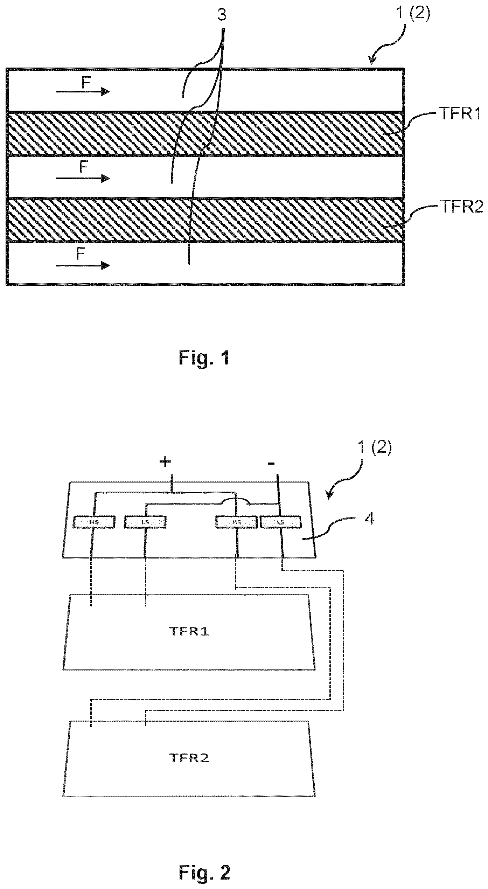

Fig. 1 shows a sectional view of a heater 1 according to the invention provided for a battery electric vehicle for heating a fluid F. For this purpose, the heater 1 carries out a method 2 according to the invention, as will be explained in more detail below. The heater 1 contains two resistor elements TFR1 and TFR2 and three flat tubes 3 through which the fluid F flows. The resistor elements TFR1 and TFR2 are thick-film heating elements or so-called TFR heating elements and are flat. In the heater 1, the resistor elements TFR1 and TFR2 are stacked and connected with the flat tubes 3 in a heat-transferring manner. This allows the resistor elements TFR1 and TFR2 to transfer the generated heat to the fluid F in the flat tubes 3. The resistor elements TFR1 and TFR2 can be identical parts and have an identical electrical resistance within the scope of manufacturing tolerances.

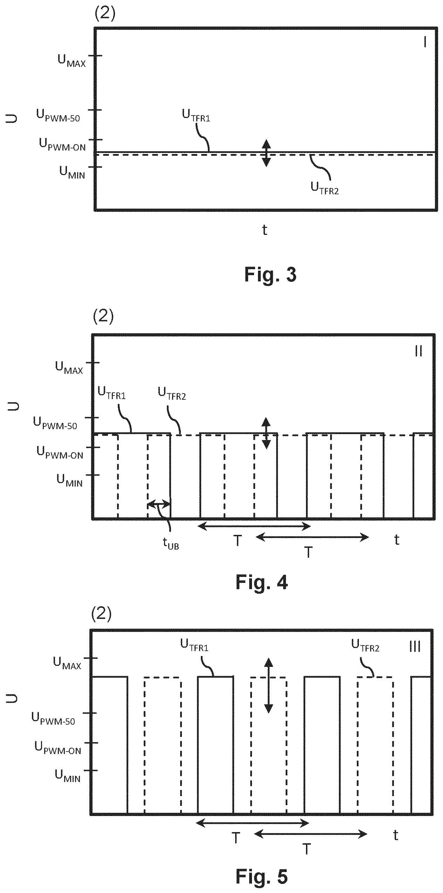

Fig. 2 shows a view of the electric heater 1 according to the invention in a first embodiment. In the first embodiment, the resistor elements TFR1 and TFR2 are connected in parallel to each other. The heater 1 contains a control unit 4 for controlling and/or regulating the resistor elements TFR1 and TFR2. The control unit 4 contains switching elements HS (HS: high side) and LS (LS: low side) for switching and protecting the respective resistor elements TFR1 and TFR2. The switching elements HS and LS are, for example, IGBTs. The heater 1 is provided to carry out the method 2 according to the invention, as will be explained with reference to Fig. 3 to Fig. 7 in more detail below.

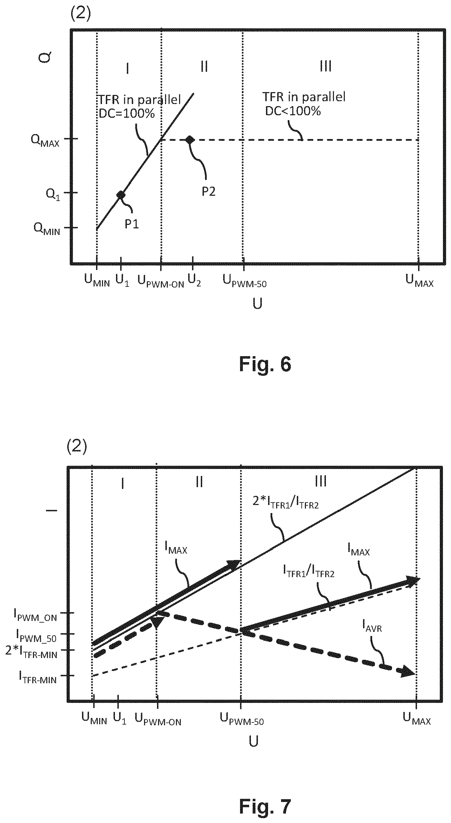

Fig. 3 to Fig. 5 show time-dependent diagram of the operating voltage U at the resistor elements TFR1 and TFR2 of the heater 1 in the first embodiment. Fig. 6 shows a voltage-dependent diagram of a heating power Q in the heater 1 in the first embodiment. Fig. 7 shows a voltage-dependent diagram of a current I in the heater 1 in the first embodiment.

With reference to Fig. 6, the heater 1 is operated in method 2 with an operating voltage U between a minimum voltage U_MIN and a maximum voltage U_MAX. The minimum voltage U_MIN and a maximum voltage U_MAX are specified by a voltage which can be provided by the traction battery of the battery electric vehicle. The operating voltage U is pulse-width-modulated with a duty cycle DC between 0% and 100%, for example by means of a square-wave signal. When operated with the operating voltage U, the heater 1 generates a heating power Q. In the method 2, the heater 1 is controlled and/or regulated in such a way that the heating power Q lies between a required minimum heating power Q_MIN and a required maximum heating power Q_MAX. The electrical resistance of the resistor elements TFR1 and TFR2 is selected so that the minimum heating power Q_MIN is achieved at the minimum voltage U_MIN. For defining the voltage ranges, a first voltage U_PWM-ON and a second voltage U_PWM-50 can be defined. The first voltage U_PWM-ON is thereby a voltage, at which the maximum heating power Q_MAX can be achieved with the duty cycle DC equal to 100%.

The second voltage U_PWM-50 is thereby a voltage, at which the maximum heating power Q_MAX can be achieved with the duty cycle DC equal to 50%.

With reference to Fig. 6, the operating voltage U can be provided in a first voltage range I, in a second voltage range II and in a third voltage range III. In the first voltage range I, the operating voltage U has comparatively low voltage values between the minimum voltage U_MIN and the first voltage U_PWM-ON. In the second voltage range II, the operating voltage U has comparatively medium voltage values between the first voltage U_PWM-ON and the second voltage U_PWM-50. In the third voltage range III, the operating voltage U has comparatively high voltage values between the second voltage U_PWM-50 and the maximum voltage U_MAX.

With reference to Fig. 3, in the first voltage range I, the operating voltage U is pulse-width-modulated with the duty cycle DC equal to 100% and applied to the resistor elements TFR1 and TFR2 of the heater 1. An individual voltage U_TFR1 is applied to the resistor element TFR1 and an individual voltage U_TFR2 is applied to the resistor element TFR2. In the first voltage range I, the heating power Q lies under the maximum heating power Q_MAX even by the duty cycle DC equal to 100%. Only by the first voltage U_PWM-ON the heating power Q achieves the maximum heating power Q_MAX.

With reference to Fig. 4, in the second voltage range II, the operating voltage U is pulse-width-modulated with the duty cycle DC between 100% and 50% and applied to the resistor elements TFR1 and TFR2 of the heater 1. The duty cycle DC decreases from 100% to 50% with the increasing operating voltage U. Voltage pulses of the individual voltages U_TFR1 and U_TFR2 at the resistor elements TFR1 and TFR2 alternate in time i.e. are shifted in time to each other. Here, the individual voltages U_TFR1 and U_TFR2 are equal to one another. The shift of the individual voltages U_TFR1 and U_TFR2 relative to each other is such that an overlap time t_UB of the individual voltage pulses is minimized. In this example, the individual voltages U_TFR1 and U_TFR2 are shifted relative to each other by half a period duration T of the pulse-width-modulated operating voltage U. In the second voltage range II, the heating power Q greater than the maximum heating power Q_MAX can be achieved. By reducing the duty cycle DC, the heating power Q can be regulated to lie between the minimum heating power Q_MIN and the maximum heating power Q_MAX.

With reference to Fig. 5, in the third voltage range III, the operating voltage U is pulse-width-modulated with the duty cycle DC between 50% and 0% and applied to the resistor elements TFR1 and TFR2 of the heater 1. It goes without saying that the entire range between 50% and 0% is not used in practice. In particular, the duty cycle DC close to 0% can be irrelevant in practice. The duty cycle DC decreases from 50% to 0% with the increasing operating voltage U. Voltage pulses of the individual voltages U_TFR1 and U_TFR2 at the resistor elements TFR1 and TFR2 alternate i.e. are shifted in time to each other. Here, the individual voltages U_TFR1 and U_TFR2 are equal to one another. The shift of the individual voltages U_TFR1 and U_TFR2 relative to each other is such that the overlap time t_UB is zero. In this example, the individual voltages U_TFR1 and U_TFR2 are shifted relative to each other by half the period duration T of the pulse-width-modulated operating voltage U. In the third voltage range III, the heating power Q greater than the maximum heating power Q_MAX can be achieved. By reducing the duty cycle DC, the heating power Q can be regulated to lie between the minimum heating power Q_MIN and the maximum heating power Q_MAX.

Referring again to Fig. 6, the heater 1 is controlled and/or regulated at any operating voltage U to a heating power Q between the minimum heating power Q_MIN and the maximum heating power Q_MAX. The heating power Q of the heater 1 in the first voltage range I achieves the maximum heating power Q_MAX only at the first voltage U_PWM-ON, even at a duty cycle equal to 100%. Thus, at point P1, maximal a heating power Q equal to Q_1 is achieved at the operating voltage U equal to U_1. In the second voltage range II and the third voltage range III, on the other hand, the heating power Q of the heater 1 is reduced by pulse-width-modulation of the operating voltage U with the duty cycle between 100% and 0%. Thus, at point P2, by the operating voltage U equal to U_2 and the duty cycle equal to 100%, a heating power Q greater than the maximum heating power Q_MAX can be achieved. However, due to the duty cycle below 100%, the heating power Q at point P2 is reduced to the maximum heating power Q_MAX in method 2. Independently of the example shown here, in the voltage ranges II and III, the heating power Q can be regulated by further reducing the duty cycle DC to lie between the minimum heating power Q_MIN and the maximum heating power Q_MAX.

With reference to Fig. 7, the maximum current I_MAX and an averaged current I_AVR in the heater 1 are also reduced in method 2. In the heater 1, individual currents I_TFR1 and I_TFR2 flow at the resistor elements TFR1 and TFR2 when the operating voltage U is applied. When the operating voltage U is applied to the two resistor elements TFR1 and TFR2, a current I_TFR1+ I_TFR2 i.e. 2*I_TFR1 i.e. 2*I_TFR2 flows in the heater 1 due to the resistor elements TFR1 and TFR2 are connected in parallel.

In the first voltage range I, the pulse-width-modulated operating voltage U between the minimum voltage U_MIN and the first voltage U_PWM-ON with a duty cycle equal to 100% is applied to the resistor elements TFR1 and TFR2. The individual currents I_TFR1 and I_TFR2 flow continuously in the resistor elements TFR1 and TFR2. The maximum current I_MAX is equal to a sum of the individual currents I_TFR1 and I_TFR2 i.e. to the double individual current 2*I_TFR1 i.e. 2*I_TFR2. Because the individual currents I_TFR1 and I_TFR2 flow continuously in the resistor elements TFR1 and TFR2, the average current I_AVR is equal to the maximum current I_MAX. In the voltage range I, the respective individual current I_TFR1 and I_TFR2 increases with the increasing operating voltage U from a minimum individual current I_TFR-MIN. The maximum current I_MAX and the average current I_AVR increase in the first voltage range I from the double minimum individual current 2*I_TFR-MIN up to a current I_PWM-ON corresponding to the first voltage U_PWM-ON.

In the second voltage range II, the pulse-width-modulated operating voltage U between the first voltage U_PWM-ON and the second voltage U_PWM-50 with duty cycle DC between 100% and 50% is applied to the resistor elements TFR1 and TFR2. In the second voltage range II, the individual voltages U_TFR1 and U_TFR2 at the resistor elements TFR1 and TFR2 and the individual currents I_TFR1 and I_TFR2 overlap only in the overlap time t_UB. As a result, the maximum current I_MAX is still equal to a sum of the individual currents I_TFR1 and I_TFR2 i.e. to the double individual current 2*I_TFR1 i.e. 2*I_TFR2. The average current I_AVR is no longer corresponding to the maximum current I_MAX and falls with the increasing operating voltage U and correspondingly with the falling duty cycle DC and correspondingly with the falling overlap time t_UB. Thereby, the average current I_AVR decreases from the current I_PWM-ON corresponding to the first voltage U_PWM-ON to a current I_PWM-50 corresponding to the second voltage U_PWM-50.

In the third voltage range III, the pulse-width-modulated operating voltage U between the second voltage U_PWM-50 and the maximum voltage U_MAX with duty cycle DC between 50% and 0% is applied to the resistor elements TFR1 and TFR1. Because the voltage pulses of the individual voltages U_TFR1 and U_TFR2 at the resistor elements TFR1 and TFR2 do not overlap - see Fig. 5 - the individual currents I_TFR1 and I_TFR2 do not overlap, too. As a result, the maximum current I_MAX is equal to the individual current I_TFR1 or I_TFR2. The averaged current I_AVR continues to fall with the increasing operating voltage U and correspondingly with the falling duty cycle DC from the current I_PWM-50 corresponding to the second voltage U_PWM-50.

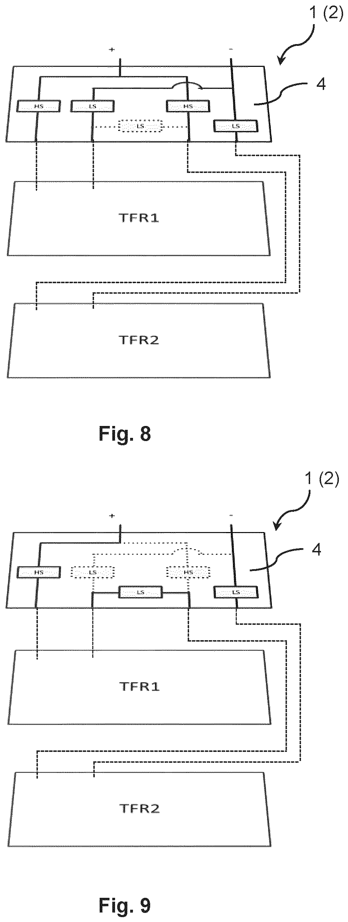

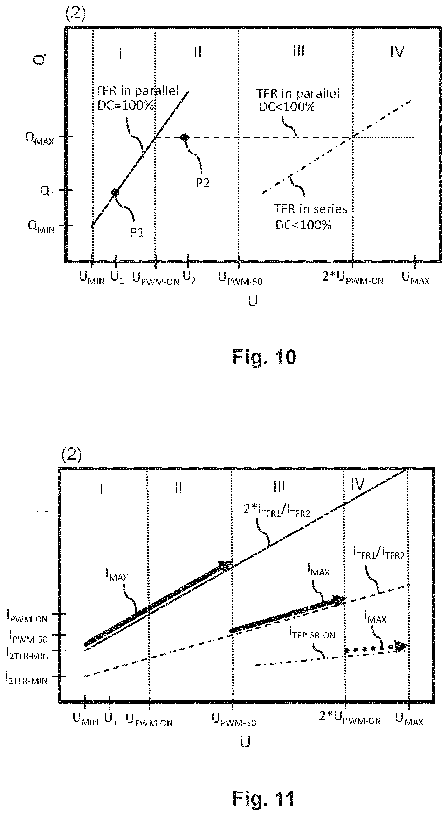

Fig. 8 and Fig. 9 show views of the heater 1 according to the invention in a second embodiment. In the second embodiment, the resistor elements TFR1 and TFR2 can be switched in parallel and in series with each other. For this purpose, the control unit 4 of the heater 1 contains an additional switching element LS. In Fig. 8, the resistor elements TFR1 and TFR2 are connected in parallel. In Fig. 9, the resistor elements TFR1 and TFR2 are connected in series. The heater 1 is provided to carry out the method 2 according to the invention, as will be explained with reference to Fig. 10 to Fig. 11 in more detail below.

Fig. 10 shows a voltage-dependent diagram of the heating power Q in the heater 1 in the second embodiment. Fig. 11 shows a voltage-dependent diagram of the current I in the heater 1 in the second embodiment.

With reference to Fig. 10, the operating voltage U can be provided in the first voltage range I, in the second voltage range II, in the third voltage range III and in a fourth voltage range IV. In the first voltage range I, the operating voltage U is between the minimum voltage U_MIN and the first voltage U_PWM-ON. In the second voltage range II, the operating voltage U is between the first voltage U_PWM-ON and the second voltage U_PWM-50. In the third voltage range, the operating voltage U is between the second voltage U_PWM-50 and a double first voltage 2*U_PWM-ON. In the fourth voltage range, the operating voltage U is between the double first voltage 2*U_PWM-ON and the maximum voltage U_MAX.

With reference to Fig. 10, the heater 1 is regulated and/or controlled in the voltage ranges I to III as described above. In the fourth voltage range IV, the resistor elements TFR1 and TFR2 are connected in series with each other. With reference to Fig. 11, the electrical resistance of the heater 1 is thus increased in the fourth voltage range IV and is a sum of the electrical resistances of the individual resistor elements TFR1 and TFR2. Accordingly, a current I_TFR-SR-ON flowing through the resistor elements TFR1 and TFR2 is reduced at the same operating voltage U. The maximum current I_MAX then corresponds to the current I_TFR-SR-ON and is smaller than the maximum current I_MAX for the resistor elements TFR1 and TFR2 connected in parallel.

In the heater 1 described above with reference to Fig. 2 to Fig. 11, it was assumed for simplification that the resistor elements TFR1 and TFR2 have an identical electrical resistance. However, it is understood that the resistor elements TFR1 and TFR2 can also have a different electrical resistance. Furthermore, the heater 1 can also have more than two resistor elements TFR1 and TFR2.

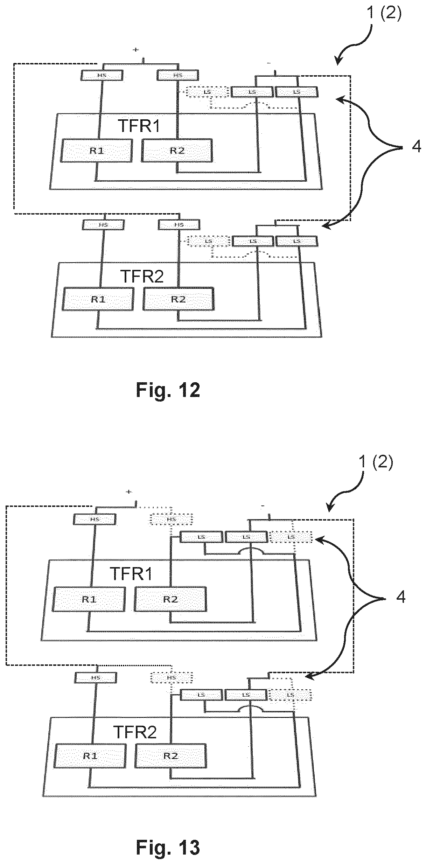

Fig. 12 and Fig. 13 show views of the electric heater 1 according to the invention in a third embodiment. In the third embodiment, each of the resistor elements TFR1 and TFR2 has two resistor tracks R1 and R2. The resistor tracks R1 and R2 can have an identical or different electrical resistance. Furthermore, the heater 1 can also have more than two resistor tracks R1 and R2. The resistor tracks R1 and R2 can be connected in parallel and in series with each other. To control the resistor tracks R1 and R2, the control unit 4 of the heater 1 contains additional switching elements LS and HS. In Fig. 12, the resistor tracks R1 and R2 are connected in parallel and in Fig. 13, the resistor tracks R1 and R2 are connected in series. In method 2, the resistor tracks R1 and R2 can be connected in parallel in the voltage ranges I and II and in series in the voltage ranges III and optionally IV. Furthermore, the individual resistor tracks R1 and R2 can be switched off. Overall, this allows the heater 1 to be better controlled in method 2 and the maximum current I_MAX can be further reduced.

## Claims

1. Method (2) for operating an electric heater (1) for a battery electric vehicle with at least two resistor elements (TFR1, TFR2),
- wherein the heater (1) is operated with an operating voltage (U) between a minimum voltage (U_MIN) and a maximum voltage (U_MAX) and pulse-width-modulated with a duty cycle (DC), and
- wherein the heater (1) is controlled and/or regulated to generate a heating power (Q) between a required minimum heating power (Q_MIN) and a required maximum heating power (Q_MAX),
**characterized**
- **in that**, when the heater (1) is operated with the operating voltage (U) in a first voltage range (I) with comparatively low voltage values, the resistor elements (TFR1, TFR2) are connected in parallel with one another and the operating voltage (U) is pulse-width-modulated with the duty cycle (DC) equal to 100% and applied to the resistor elements (TFR1, TFR2),
- **in that**, when the heater (1) is operated with the operating voltage (U) in a second voltage range (II) with comparatively medium voltage values, the resistor elements (TFR1, TFR2) are connected in parallel with one another and the operating voltage (U) is pulse-width-modulated with the duty cycle (DC) between 100% and 50% and applied to the resistor elements (TFR1, TFR2) in such a way that voltage pulses of individual voltages (U_TFR1, U_TFR2) at the resistor elements (TFR1, TFR2) corresponding to the operating voltage (U) alternate in time, and
- **in that**, when the heater (1) is operated with the operating voltage (U) in a third voltage range (III) with comparatively high voltage values, the resistor elements (TFR1, TFR2) are connected in parallel with one another and the operating voltage (U) is pulse-width-modulated with the duty cycle (DC) between 50% and 0% and applied to the resistor elements (TFR1, TFR2) in such a way that voltage pulses of individual voltages (U_TFR1, U_TFR2) at the resistor elements (TFR1, TFR2) corresponding to the operating voltage (U) alternate in time.

2. Method (2) according to claim 1,
**characterized**
**in that**, in the second voltage range (II), the operating voltage (U) is applied to the resistor elements (TFR1, TFR2) in such a way that the overlap time (t_UB), in which the voltage pulses of the individual voltages (U_TFR1, U_TFR2) at the resistor elements (TFR1, TFR2) corresponding to the operating voltage (U) overlap in time, is minimized.

3. Method (2) according to claim 1 or 2,
**characterized**
- **in that**, in the second voltage range (II), the operating voltage (U) is applied to the resistor elements (TFR1, TFR2) in such a way that the overlap time (t_UB), in which the voltage pulses of the individual voltages (U_TFR1, U_TFR2) at the resistor elements (TFR1, TFR2) corresponding to the operating voltage (U) overlap in time, is less than a product of a period duration (T) of the pulse-width-modulated operating voltage (U) and a difference of the double duty cycle (DC) and 100% divided by 100%, and/or
- **in that**, in the second voltage range (II), the operating voltage (U) is applied to the resistor elements (TFR1, TFR2) in such a way that the individual voltages (U_TFR1, U_TFR2) at the resistor elements (TFR1, TFR2) corresponding to the operating voltage (U) are shifted relative to one another, preferably by half the period duration (T) of the pulse-width-modulated operating voltage (U).

4. Method (2) according to one of the preceding claims,
**characterized**
**in that**, in the third voltage range (III), the operating voltage (U) is applied to the resistor elements (TFR1, TFR2) in such a way that the overlap time (t_UB), in which the voltage pulses of the individual voltages (U_TFR1, U_TFR2) at the resistor elements (TFR1, TFR2) corresponding to the operating voltage (U) overlap in time, is equal to zero.

5. Method (2) according to one of the preceding claims,
**characterized**
**in that**, in the third voltage range (III), the operating voltage (U) is applied to the resistor elements (TFR1, TFR2) in such a way that the individual voltages (U_TFR1, U_TFR2) at the resistor elements (TFR1, TFR2) corresponding to the operating voltage (U) are shifted relative to one another, preferably by half of the period duration (T) of the pulse-width-modulated operating voltage (U).

6. Method (2) according to one of the preceding claims,
**characterized**
**in that** the electrical resistance of the resistor elements (TFR1, TFR2) is selected in such a way that the heater (1) generates the required minimum heating power (Q_MIN) at the minimum voltage (U_MIN).

7. Method (2) according to one of the preceding claims,
**characterized**
- **in that**, in the second voltage range (II), the duty cycle (DC) of the pulse-width-modulated operating voltage (U) falls from 100% to 50% with the increasing operating voltage (U), and/or
- **in that**, in the third voltage range (III), the duty cycle (DC) of the pulse-width-modulated operating voltage (U) falls from 50% to 0% with the increasing operating voltage (U).

8. Method (2) according to one of the preceding claims,
**characterized**
**in that** at least one of the resistor elements (TFR1, TFR2) contains at least two resistor tracks (R1, R2) which are connectable in series and in parallel to one another,
- wherein the resistor tracks (R1, R2) of the resistor element (TFR1, TFR2) are connected in parallel or in series with one another depending on the operating voltage (U), and/or
- wherein individual or some resistor tracks (R1, R2) of the resistor element (TFR1, TFR2) are switched off depending on the operating voltage (U), so that the operating voltage (U) is only applied to individual or some resistor tracks (R1, R2) of the resistor element (TFR1, TFR2).

9. Method (2) according to one of the preceding claims,
**characterized**
- **in that** a first voltage (U_PWM-ON) is defined as a voltage, at which the required maximum heating power (Q_MAX) is generated with the duty cycle (DC) equal to 100% and a second voltage (U_PWM-50) is defined as a voltage, at which the required maximum heating power (Q_MAX) is generated with the duty cycle (DC) equal to 50%,
- **in that**, in the first voltage range (I), the operating voltage (U) is provided with the comparatively low voltage values between the minimum voltage (U_MIN) and the first voltage (U_PWM-ON),
- **in that**, in the second voltage range (II), the operating voltage (U) is provided with the comparatively medium voltage values between the first voltage (U_PWM-ON) and the second voltage (U_PWM-50), and
- **in that**, in the third voltage range (III), the operating voltage (U) is provided with the comparatively high voltage values between the second voltage (U_PWM-50) and the maximum voltage (U_MAX).

10. Method (2) according to one of the preceding claims,
**characterized**
**in that**, when the heater (1) is operated with the operating voltage (U) in a fourth voltage range (IV) with comparatively very high voltage values, the resistor elements (TFR1, TFR2) are connected in series with one another.

11. Method (2) according to claim 10,
**characterized**
- **in that** a first voltage (U_PWM-ON) is defined as a voltage, at which the required maximum heating power (Q_MAX) is generated with the duty cycle (DC) equal to 100% and a second voltage (U_PWM-50) is defined as a voltage, at which the required maximum heating power (Q_MAX) is generated with the duty cycle (DC) equal to 50%,
- **in that**, in the first voltage range (I), the operating voltage (U) is provided with the comparatively low voltage values between the minimum voltage (U_MIN) and the first voltage (U_PWM-ON),
- **in that**, in the second voltage range (II), the operating voltage (U) is provided with the comparatively medium voltage values between the first voltage (U_PWM-ON) and the second voltage (U_PWM-50),
- **in that**, in the third voltage range (III), the operating voltage (U) is provided with the comparatively high voltage values between the second voltage (U_PWM-50) and a double first voltage (2*U_PWM-ON), and
- **in that**, in the fourth voltage range (IV), the operating voltage (U) is provided with the comparatively very high voltage values between the double first voltage (2*U_PWM-ON) and the maximum voltage (U_MAX).

12. Electrical heater (1) for a battery electric vehicle for heating a fluid (F),
- wherein the heater (1) contains at least two resistor elements (TFR1, TFR2) each with an electrical resistance and at least three flat tubes (3) through which the fluid (F) can flow,
- wherein the resistor elements (TFR1, TFR2) and the flat tubes (3) are stacked together so that each of the resistor elements (TFR1, TFR2) is arranged between two flat tubes (3),
- wherein the resistor elements (TFR1, TFR2) are connected to the adjacent flat tubes (3) in a heat-transferring manner, and
- wherein the heater (1) contains a control unit (4) for controlling and/or regulating the resistor elements (TFR1, TFR2),
**characterized**
**in that** the heater (1) is provided to carry out the method (2) according to one of the preceding claims.

13. Heater (1) according to claim 12,
**characterized**
- **in that** the resistor elements (TFR1, TFR2) are connected in parallel with each other, and/or
- **in that** the resistor elements (TFR1, TFR2) are connectable in parallel and in series with one another, and/or
- **in that** the electrical resistance of at least some of the resistor elements (TFR1, TFR2) is different, and/or
- **in that** the electrical resistance of at least some of the resistor elements (TFR1, TFR2) is identical.

14. Heater (1) according to claim 12 or 13,
**characterized**
**in that** at least one of the resistor elements (TFR1, TFR2) contains at least two resistor tracks (R1, R2) each with an electrical resistance.

15. Heater (1) according to claim 14,
**characterized**
- **in that** the resistor tracks (R1, R2) of the resistor element (TFR1, TFR2) are connected in parallel with each other, and/or
- **in that** the resistor tracks (R1, R2) of the resistor element (TFR1, TFR2) are connectable in parallel and in series with one another, and/or
- **in that** the electrical resistance of at least some of the resistor tracks (R1, R2) of the resistor element (TFR1, TFR2) is different, and/or
- **in that** the electrical resistance of at least some of the resistor tracks (R1, R2) of the resistor element (TFR1, TFR2) is identical, and/or
- **in that** individual or some resistor tracks (R1, R2) of the resistor element (TFR1, TFR2) are switchable off.
